# EUROPEAN PATENT SPECIFICATION

(11) **EP 3 309 059 B1**
(45) Date of publication and mention of the grant of the patent: **04.12.2019**
(21) Application number: 17195660.0
(22) Date of filing: 10.10.2017
(51) Int. Cl.: B64C 9/32

(54) **AIRCRAFT WINGS, AIRCRAFT, AND RELATED METHODS**
FLUGZEUGTRAGFLÄCHEN, FLUGZEUG UND ZUGEHÖRIGE VERFAHREN
AILES D'AÉRONEF, AÉRONEF ET PROCÉDÉS ASSOCIÉS

(30) Priority: 12.10.2016 US 201615291859
(43) Date of publication of application: 18.04.2018
(73) Proprietor: The Boeing Company, Chicago, IL 60606-1596 (US)
(72) Inventor: KORDEL, Jan A., Chicago, IL 60606-1596 (US); BALZER, Michael Albert, Chicago, IL 60606-1596 (US); BURTON, Jeffrey, Chicago, IL 60606-1596 (US); WALKER, Steven Paul, Chicago, IL 60606-1596 (US); SAUNDERS, John Barry, Chicago, IL 60606-1596 (US)
(74) Representative: Bartelds, Erik

(56) References cited:
- EP-A1- 3 045 300
- EP-A2- 2 862 798
- WO-A1-2016/023056
- WO-A2-2006/084157
- GB-A- 870 689
- US-A- 3 666 210
- US-A1- 2009 320 398

## Description

### FIELD

The present disclosure relates to aircraft spoilers.

### BACKGROUND

Aircraft wing assemblies may include spoilers configured to alter the aerodynamic properties of the wings, such as to reduce the lift produced by the wings at a given airspeed, augment the high lift performance of high lift flaps by turning the upper surface airflow through spoiler droop, and augment roll authority provided by ailerons. Spoilers for commercial aircraft generally are complex core-stiffened composite or metal bond assemblies with metallic attachment lugs mechanically fastened and sealed to the bond assembly. The attachment of these lugs to the remainder of the spoiler may introduce moisture ingression, thermal loading, mechanical distortion, and other issues that may incur maintenance costs to address. In addition, the assembly of multiple materials in a geometrically precise and stable configuration may impose significant manufacturing costs.

WO 2016/023056 A1 discloses a control surface element for an airplane, in particular a spoiler, comprising a composite fiber element that has a surface around which air flows, a mounting device for movably mounting the composite fiber element on a structural component, and a reinforcing structure for reinforcing the composite fiber element. The reinforcing structure has at least one reinforcing element which is integrally formed with the composite fiber element. The reinforcing structure has a primary reinforcing element which is designed to receive main loads and which is connected to at least one secondary reinforcing element that is designed to receive secondary loads. The composite fiber element has a recess for integrally forming the primary reinforcing element.

It is with respect to these and other considerations that the disclosure made herein is presented.

### SUMMARY

Aircraft wings, aircraft, and related methods are disclosed. An aircraft wing in accordance with this disclosure is defined in claim 1. Embodiments of this aircraft wing form the subject matter of dependent claims 2-13. The disclosure further provides an aircraft as defined in claim 14. A method of constructing a spoiler for an aircraft wing in accordance with the present disclosure is defined in claim 15.

### BRIEF DESCRIPTION OF THE DRAWINGS

Fig. 1 is a perspective view of an example aircraft.
Fig. 2 is a schematic top plan view representing a spoiler.
Fig. 3 is a schematic bottom plan view representing the spoiler of Fig. 2.
Fig. 4 is a schematic cross-sectional elevation view representing a spoiler and a flap each in a stowed position.
Fig. 5 is a schematic cross-sectional elevation view representing the spoiler and the flap of Fig. 4, with the spoiler in a drooped position and the flap in a deployed position.
Fig. 6 is a schematic cross-sectional elevation view of the spoiler and the flap of Figs. 4-5, with the spoiler and the flap each in a deployed position.
Fig. 7 is a perspective top view representing an example of a spoiler.
Fig. 8 is a perspective bottom view representing the spoiler of Fig. 7.
Fig. 9 is a flowchart schematically representing methods of constructing a spoiler for an aircraft wing.
Fig. 10 is a flowchart schematically representing aircraft production and service methodology.
Fig. 11 is a block diagram schematically representing an aircraft.

### DESCRIPTION

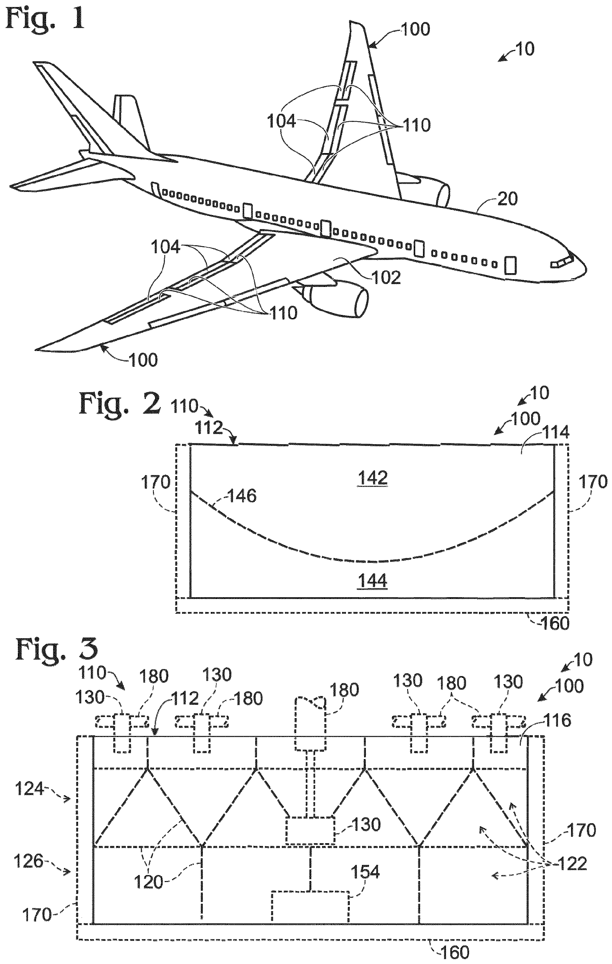

Figs. 1-8 provide illustrative, non-exclusive examples of spoilers 110, of components and/or features of spoilers 110, and/or of aircraft 10 and/or wing assemblies 100 including spoilers 110, according to the present disclosure. Elements that serve a similar, or at least substantially similar, purpose are labeled with like numbers in each of Figs. 1-8, and these elements may not be discussed in detail herein with reference to each of Figs. 1-8. Similarly, all elements may not be labeled in each of Figs. 1-8, but reference numerals associated therewith may be utilized herein for consistency. Elements, components, and/or features that are discussed herein with reference to one or more of Figs. 1-8 may be included in and/or utilized with any of Figs. 1-8 without departing from the scope of the present disclosure.

Fig. 1 is an illustration of an example aircraft 10 that includes spoilers 110 according to the present disclosure. Aircraft 10 generally may be utilized to transport persons and/or cargo. As illustrated in Fig. 1, aircraft 10 generally includes a fuselage 20 and an aircraft wing 100 operatively coupled to fuselage 20. As used herein, aircraft wing 100 also may be referred to as a wing assembly 100 and/or a wing 100. Aircraft wing 100 includes one or more spoilers 110, and additionally may include one or more flaps 104. Aircraft wing 100 includes an airfoil surface 102, which may include and/or be defined in part by flaps 104 and/or spoilers 110. As used herein, airfoil surface 102 generally may refer to an exterior surface of aircraft wing 100, and/or a cross-sectional shape thereof, which may be configured to produce desired aerodynamic effects such as lift forces and drag forces.

Aircraft wing 100 and/or airfoil surface 102 thereof generally is configured to produce an upward lift force when aircraft 10 is in flight. In some cases, such as when aircraft 10 is at a cruising airspeed, aircraft wing 100 and/or airfoil surface 102 may be operatively configured to minimize a drag force that opposes the motion of aircraft 10. Spoilers 110 and flaps 104 generally are configured to be selectively deployed to modify the aerodynamic properties of aircraft wing 100. For example, spoilers 110 may be configured when deployed to reduce the lift force produced by aircraft wing 100, such as to decrease an altitude of aircraft 10 without a significant increase in the airspeed of aircraft 10 and/or to transfer a weight of aircraft 10 to a wheel assembly of aircraft 10 for more effective braking upon landing. In addition, spoilers 110 may be selectively pivoted only very slightly (e.g., about 1° or less) to optimize high speed drag. In such situations, spoilers 110 are maintained in contact with corresponding flaps 104. Similarly, flaps 104 may be configured when deployed to increase the lift force produced by aircraft wing 100, especially at low airspeeds, and/or to increase the drag force produced by aircraft wing 100. As described herein, spoiler 110 and/or flap 104 each may be described as having one or more stowed positions and one or more deployed positions, such that spoiler 110 and flap 104 generally conform to airfoil surface 102 in the respective stowed positions.

Figs. 2-3 are schematic representations of spoilers 110. Specifically, Fig. 2 is a schematic representation of an upper body side 114 of spoiler 110, and Fig. 3 is a schematic representation of a lower body side 116 of spoiler 110. In Figs. 2-3, elements that are likely to be included in a given example of spoiler 110 are illustrated in solid lines, while elements that are optional to a given example of spoiler 110 are illustrated in broken lines. Upper body side 114 defines a portion of airfoil surface 102 when spoiler 110 is stowed. As illustrated in Figs. 2-3, spoiler 110 includes, consists essentially of, and/or is constructed substantially of a monolithic structural body 112.

As used herein, "monolithic" refers to a structure that is unitary in nature and that is not comprised of an assembly of individual components that are fastened together, such as by fasteners or adhesives. For example, a monolithic structure, while having distinct regions, portions, and the like, includes only a single overall component.

By being constructed "substantially" of monolithic structural body 112, it is meant that monolithic structural body 112 defines the primary structural component of spoiler 110, such as with monolithic structural body 112 comprising greater than 95-99% of the mass of spoiler 110. Monolithic structural body 112 may be constructed of any appropriate material, and/or may be metallic. For example, monolithic structural body 112 may include, consist of, and/or consist essentially of aluminum, an aluminum alloy, titanium, and/or steel. Similarly, monolithic structural body 112 may be constructed in any appropriate manner. For example, monolithic structural body 112 may be a machined structural body 112, may be a 3D-printed structural body 112, and/or may be produced by an additive manufacturing technique. Additionally, spoiler 110 may be constructed such that spoiler 110 is devoid, or free, of honeycomb core structures and/or sandwich panels. In this way, construction of monolithic structural body 112 may be significantly less expensive and/or more rapid than construction of a spoiler body that includes honeycomb core structures and/or sandwich panels. Spoilers 110 according to the present disclosure also may be more robust, less prone to mechanical wear, and/or less prone to moisture ingress relative to spoilers constructed as complex core-stiffened composite or metal bond assemblies with metallic attachment lugs mechanically fastened and sealed to the bond assembly.

As schematically illustrated in Figs. 2-3, some examples of spoiler 110 additionally include a flexible trailing edge structure 160 coupled to monolithic structural body 112 along an aft edge of monolithic structural body 112. Flexible trailing edge structure 160 may be configured to engage and/or seal against a separate component of aircraft wing 100, such as flap 104. Flexible trailing edge structure 160 may be constructed of a composite material, such as a fiber reinforced composite material, and/or of a metallic material, such as from a sheet metal, optionally an aluminum alloy sheet. As used herein, a fiber reinforced composite material should be understood to include at least an epoxy or other polymer or binding material together with fibers, such as (but not limited to) carbon fibers, boron fibers, aramid fibers, glass fibers, and/or other fibers. Additionally or alternatively, spoiler 110 may include one or more side seals 170 coupled to monolithic structural body 112 along lateral edges thereof. Side seals 170 may be configured to engage and/or seal against a separate component of aircraft wing 100, such as an adjacent spoiler 110 and/or airfoil surface 102. Side seals 170 may be constructed of any appropriate material, an example of which may include a coated fabric material, such as a DACRON™ fabric.

As illustrated in Fig. 2, upper body side 114 of monolithic structural body 112 may include and/or be an upper surface. The upper surface may be described as including a forward region 142 and an aft region 144 rearward of forward region 142. In some examples, forward region 142 and aft region 144 are separated by and/or defined by a parabolic, or generally parabolic, boundary 146 having an aft-facing vertex; however, other shapes of boundaries 146 also are within the scope of the present disclosure. Forward region 142 may be configured to match, be continuous with, and/or be smoothly continuous with airfoil surface 102 of aircraft wing 100 when spoiler 110 is in a stowed position, optionally at all times when spoiler 110 is in a stowed position. Aft region 144 may be configured to be deflected in a downward direction relative to forward region 142. In such a configuration, aft region 144 may match, be continuous with, and/or be smoothly continuous with airfoil surface 102 and/or forward region 142 responsive to an air pressure and/or an air pressure differential when aircraft 10 is traveling at a cruising speed and when spoiler 110 is in a stowed position. Aft region 144 may be configured to be more flexible and/or more compliant than forward region 142, such as may result from a generally decreased thickness and/or rigidity of monolithic structural body 112 in aft region 144 relative to forward region 142.

Turning now to Fig. 3, lower body side 116 of spoiler 110 may include a plurality of stiffening ribs 120 that define a plurality of open voids 122. Open voids 122 additionally or alternatively may be referred to as, or described as, pockets or areas. Stiffening ribs 120 and open voids 122 may be exposed to an exterior of spoiler 110. For example, and in contrast to a traditional spoiler construction, spoiler 110 may be devoid, or free, of a skin (e.g., an inner or lower skin) that extends across the plurality of stiffening ribs 120 to define a lower surface of spoiler 110.

Stiffening ribs 120 and open voids 122 may assume any appropriate shapes, sizes, and/or configurations. As an example, the plurality of stiffening ribs 120 and the plurality of open voids 122 may form, include, and/or be characterized as an isogrid structure with integral stiffening ribs 120 arranged in a triangular pattern. The plurality of open voids 122 may be described in terms of profiles, or shapes, when viewed from below, with such profiles optionally and generally defining polygons, including polygons of three, four, five, six, or more than six sides. As used herein, such phrases as "generally defining polygons" mean that such shapes need not be precise with perfect corners or perfectly straight edges, but rather that such shapes would be readily considered to generally define such polygons. For example, a three-sided shape with rounded corners may be described as triangular or generally triangular, and a four-sided shape with rounded corners may be described as quadrilateral or generally quadrilateral. Additionally or alternatively, the plurality of open voids 122 may include and/or consist of a first subset 124 of open voids 122 that have generally first profile shapes (e.g., triangular profiles) when viewed from below and/or a second subset 126 of open voids 122 that have generally second profile shapes (e.g., quadrilateral profiles) when viewed from below. As illustrated in Fig. 3, monolithic structural body 112 may be configured such that first subset 124 of open voids 122 is positioned predominantly forward of second subset 126 of open voids 122. Additionally or alternatively, monolithic structural body 112 may be configured such that first subset 124 is positioned generally underneath forward region 142 and/or such that second subset 126 is positioned generally underneath aft region 144. However, this is not required, and it is within the scope of the present disclosure that the plurality of open voids 122 be characterized by any appropriate number of subsets with any appropriate corresponding shapes and/or relative positions.

As used herein, positional terms such as "upper," "lower," "above," "below," and the like may be used to describe spatial relationships between components of aircraft wing 100 in an illustrative, non-limiting manner, and generally refer to a configuration in which aircraft 10 is generally upright and parallel to a ground surface. Similarly, positional terms such as "forward," "aft," "rearward," and the like generally are recited with respect to a direction in which aircraft 10 is configured to travel when in flight. For example, upper body side 114 may be described as being positioned generally vertically above lower body side 116. Similarly, forward region 142 may be described as being positioned proximal a leading edge of aircraft wing 100 relative to aft region 144, and aft region 144 may be described as being positioned proximal a trailing edge of aircraft wing 100 relative to forward region 142.

With continued reference to Fig. 3, monolithic structural body 112 may define one or more integral lugs 130 configured for attachment to one or more respective spoiler deployment mechanisms 180. Specifically, each of the one or more integral lugs 130 may be formed as an integral component of monolithic structural body 112, which may provide a more robust coupling between spoiler deployment mechanisms 180 and spoiler 110 relative to a configuration in which a distinct lug is operatively coupled to a traditional spoiler. Spoiler deployment mechanisms 180 may be any appropriate mechanisms for selectively and operatively transitioning spoiler 110 between a stowed position and the deployed position, as well as from a stowed position to a drooped position within the range of stowed positions. For example, spoiler deployment mechanisms 180 may include one or more of an axle, a hinge, a pin, a transport element, a hydraulic transport element, an actuator, a mechanical actuator, and/or a hydraulic actuator. At least one integral lug 130 may be positioned such that at least one open void 122 is positioned and sized to receive at least a portion of a spoiler deployment mechanism 180 when spoiler 110 is stowed. That is, when spoiler 110 is stowed, a spoiler deployment mechanism 180 may be at least partially positioned within an open void 122. Such a configuration may provide for compact packaging of spoiler 110, spoiler deployment mechanism 180, and overall flight control systems of aircraft wing 100.

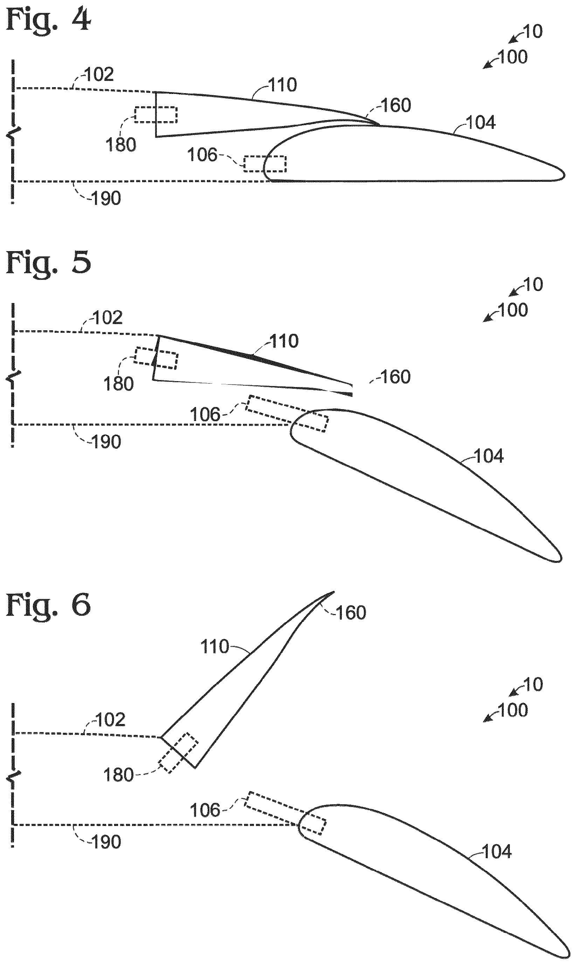

Turning now to Figs. 4-6, aircraft wing 100 additionally may include an outboard wing box 190, with spoiler 110 and flap 104 operatively coupled to outboard wing box 190. Outboard wing box 190 generally refers to the structural elements of aircraft wing 100, and generally includes upper and lower portions of airfoil surface 102. Outboard wing box 190 typically includes stiffeners, such as stringers, on an internal side of outboard wing box 190 that provide rigidity to aircraft wing 100 and/or airfoil surface 102. Outboard wing box 190 also may include such additional structural elements as a front spar that defines or supports the leading edge of aircraft wing 100 and a rear spar that defines or supports the trailing edge of aircraft wing 100, as well as spaced-apart ribs that interconnect the front spar, the rear spar, and/or a portion of airfoil surface 102. Additionally or alternatively, outboard wing box 190 may include a frame structure and a skin operatively coupled to the frame structure. Outboard wing box 190 may be constructed of any appropriate material, including metallic and non-metallic materials. For example, outboard wing box 190 may be constructed substantially of a non-metallic material, such as a composite material and/or a fiber (e.g., carbon fiber) reinforced composite material. In some such examples, flaps 104 also may be constructed substantially of a non-metallic material, such as a composite material and/or a fiber (e.g., carbon fiber) reinforced composite material. By being constructed "substantially" of a non-metallic material, it is meant that the structural components of outboard wing box 190, including skins and stiffeners, and/or flaps 104 are constructed of the non-metallic material, but not that the outboard wing box 190 and flaps 104 necessarily are constructed 100% of non-metallic material. For example, metallic fasteners may be used to couple together component parts of outboard wing box 190 and flaps 104, and various other components of aircraft wing 100, including, for example, actuators, hydraulic systems, electronic systems, etc., may be constructed of and/or include metals.

As illustrated in Figs. 4-6, spoiler 110 may be operatively coupled to outboard wing box 190, and one or more spoiler deployment mechanisms 180 may be operatively coupled between spoiler 110 and outboard wing box 190 and configured to operatively deploy and stow spoiler 110. As also illustrated in Figs. 4-6, flap 104 may be operatively coupled to outboard wing box 190 in a position at least partially below and partially rearward of spoiler 110, and aircraft wing 100 may include one or more flap deployment mechanisms 106 coupled between flap 104 and outboard wing box 190 and configured to operatively deploy and stow flap 104. Flap 104 may include and/or be characterized by any appropriate flap design and/or mechanism, and may include and/or be a fowler flap configured to translate in the forward/aft direction in addition to rotating in a downward direction. More specifically, flap 104 may be characterized by a fowler degree that is defined as a percentage of an upper surface of flap 104 that is covered by spoiler 110 when flap 104 is in a stowed flap position. As examples, flap 104 is may be described as a low fowler flap with a fowler degree of at most 35%, at most 30%, at most 25%, at most 20%, at most 15%, at most 10%, and/or at most 5%. Additionally or alternatively, in some examples, flap 104 may be described as a high fowler flap with a fowler degree of at least 10%, at least 15%, at least 20%, at least 25%, at least 30%, at least 40%, and/or at least 50%. Additionally or alternatively, flap 104 may not be configured as a slotted flap. That is, flap 104 may be configured such that air is generally restricted from flowing between flap 104 and at least a portion of a remainder of aircraft wing 100.

With continued reference to Figs. 4-6, spoiler 110 may have a deployed spoiler position in which a trailing edge of spoiler 110 is pivoted upward and away from flap 104 (Fig. 6), and a range and/or plurality of stowed spoiler positions in which upper body side 114 is generally coextensive with airfoil surface 102 (Figs. 4-5). Similarly, flap 104 may have a stowed flap position in which a bottom side of flap 104 is generally coextensive with airfoil surface 102 (Fig. 4), and a range and/or plurality of deployed flap positions in which a trailing edge of flap 104 is translated rearward and/or pivoted downward relative to spoiler 110 and/or a component of outboard wing box 190 (Figs. 5-6). The range of stowed spoiler positions also may be described as including, or being, a range of drooped spoiler positions, such as corresponding to flap 104 being in the range of deployed flap positions and/or within which spoiler 110 may be selectively pivoted downward. For example, when flap 104 is rotated downward to assume a position in the range of deployed flap positions, spoiler 110 also may rotate downward slightly to assume a position in the range of drooped spoiler positions. Additionally or alternatively, the range of deployed flap positions also may be described as including, or being, a range of drooped flap positions.

Fig. 4 schematically illustrates a configuration of aircraft wing 100 in which spoiler 110 is in the range of stowed spoiler positions and in which flap 104 is in the stowed flap position. Aircraft wing 100 may assume such a configuration when aircraft 10 is in flight and at a cruising airspeed, such as to minimize the drag force produced by aircraft wing 100.

Fig. 5 schematically illustrates a configuration of aircraft wing 100 in which spoiler 110 is in a drooped position within the range of stowed spoiler positions and in which flap 104 is in the range of deployed flap positions. Fig. 5 also may be described as illustrating a configuration in which spoiler 110 is in the range of drooped spoiler positions. Aircraft wing 100 may assume such a configuration when aircraft 10 is in the process of taking off and/or landing, such as to maximize the lift force produced by aircraft wing 100 at airspeeds below the cruising airspeed.

Fig. 6 schematically illustrates a configuration of aircraft wing 100 in which spoiler 110 is in the deployed spoiler position and in which flap 104 is in the range of deployed flap positions. Aircraft wing 100 may assume such a configuration when aircraft 10 is in motion after landing on a runway, such as to maximize the drag force produced by aircraft wing 100 and/or to minimize the lift force produced by aircraft wing 100.

Spoiler 110 and flap 104 further may be configured such that, when spoiler 110 is in the range of stowed spoiler positions and flap 104 is in the stowed flap position or in the range of deployed flap positions, the trailing edge of spoiler 110 is engaged with flap 104. In such a configuration, aircraft wing 100 may be configured to restrict and/or prevent airflow between spoiler 110 and flap 104. For example, flexible trailing edge structure 160 of spoiler 110 may be configured to exhibit a precurl that biases flexible trailing edge structure 160 in a downward direction to seal flexible trailing edge structure 160 against an upper surface of flap 104.

Additionally or alternatively, monolithic structural body 112 of spoiler 110 may include a flap contact surface 154 (as illustrated in Fig. 3) positioned at a rearward edge region of monolithic structural body 112. Flap contact surface 154 may be positioned to be engaged by flap 104 when flap 104 transitions from the range of deployed flap positions to the stowed flap position. Responsive to flap contact surface 154 being engaged by flap 104, the trailing edge of spoiler 110 may pivot upward, such as to transition spoiler 110 within the range of stowed spoiler positions, which may facilitate flap 104 returning to the stowed flap position. Stated differently, such an interaction between flap 104 and flap contact surface 154 may serve to pivot spoiler 110 upward without actuation by spoiler deployment mechanism 180, such as when spoiler deployment mechanism 180 is non-responsive to the flight control system of aircraft wing 100.

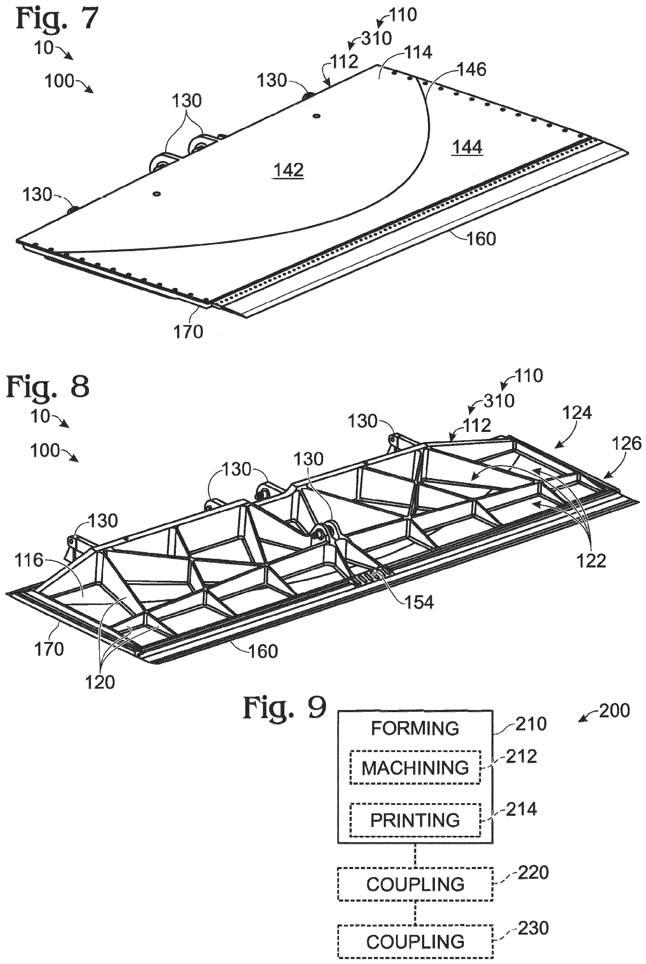

Turning now to Figs. 7-8, an illustrative, non-exclusive example of spoiler 110 in the form of spoiler 310 is illustrated. Where appropriate, the reference numerals from the schematic illustrations of Figs. 2-3 are used to designate corresponding parts of spoiler 310; however, the examples of Figs. 7-8 are non-exclusive and do not limit spoilers 110 to the illustrated examples of spoiler 310. That is, spoilers 110 are not limited to the specific examples of the illustrated spoiler 310, and spoiler 110 may incorporate any number of the various aspects, configurations, characteristics, properties, etc. of spoilers 110 that are illustrated in and discussed with reference to the schematic representations of Figs. 2-3 and/or the example of Figs. 7-8, as well as variations thereof, without requiring the inclusion of all such aspects, configurations, characteristics, properties, etc. For the purpose of brevity, each previously discussed component, part, portion, aspect, region, etc. or variants thereof may not be discussed, illustrated, and/or labeled again with respect to spoiler 310; however, it is within the scope of the present disclosure that the previously discussed features, variants, etc. may be utilized with spoiler 310.

As seen with reference to Figs. 7-8, spoiler 310 is an example of spoiler 110 that is constructed substantially of monolithic structural body 112, but also includes flexible trailing edge structure 160 and side seals 170. Moreover, as indicated in Fig. 7, monolithic structural body 112 of spoiler 310 is an example of monolithic structural body 112 that has a parabolic boundary 146 between forward region 142 and aft region 144. As seen in Fig. 8, monolithic structural body 112 of spoiler 310 is an example of monolithic structural body 112 that has first subset 124 of open voids 122 that have generally triangular profiles and that are forward of second subset 126 of open voids 122 that have generally quadrilateral profiles. That said, as shown, the region of first subset 124 also includes open voids 122 that have quadrilateral profiles. With continued reference to Fig. 8, monolithic structural body 112 of spoiler 310 has five integral lugs 130 for operative attachment to corresponding spoiler deployment mechanisms 180. Monolithic structural body 112 of spoiler 310 also includes flap contact surface 154 centrally positioned at the rearward edge region of monolithic structural body 112. More specifically, flap contact surface 154 of spoiler 310 may be described as, or as being defined by, a centrally located thickened wedge structure sized and shaped to receive a force from a corresponding flap 104, such as if a spoiler deployment mechanism 180 is non-responsive, and spoiler 310 needs to be pivoted upward from a drooped position to permit flap 104 to return to its stowed position.

Fig. 9 schematically provides a flowchart representing illustrative, non-exclusive examples of methods according to the present disclosure. In Fig. 9, some steps are illustrated in dashed boxes indicating that such steps may be optional or may correspond to an optional version of a method according to the present disclosure. That said, not all methods according to the present disclosure are required to include the steps illustrated in solid boxes. The methods and steps illustrated in Fig. 9 are not limiting and other methods and steps are within the scope of the present disclosure, including methods having greater than or fewer than the number of steps illustrated, as understood from the discussions herein. Additionally, while the methods and steps illustrated in Fig. 9 may be described as being directed to the construction of spoilers 110 and/or aircraft 10 as described herein, this is not required, and it is within the scope of the present disclosure that the methods disclosed herein may be employed in the construction of any suitable components.

As seen in Fig. 9, a method 200 of constructing a spoiler (such as spoiler 110) for an aircraft wing (such as aircraft wing 100) may include forming 210 a monolithic structural body (such as monolithic structural body 112) of the spoiler, such that the monolithic structural body has an upper side (such as upper body side 114) that defines a portion of an airfoil surface (such as airfoil surface 102) of the aircraft wing when the spoiler is stowed, and a lower side (such as lower body side 116), opposite the upper side, that includes a plurality of stiffening ribs (such as stiffening ribs 120) that define a plurality of open voids (such as open voids 122). The forming 210 may include machining 212 and/or may include 3D printing 214. As used herein, 3D printing 214 may refer to any appropriate additive manufacturing process. As further illustrated in Fig. 9, method 200 also may include coupling 220 a flexible trailing edge structure (such as flexible trailing edge structure 160) to the monolithic structural body along an aft edge of the monolithic structural body, and/or may include coupling 230 side seals (such as side seals 170) to lateral edges of the monolithic structural body.

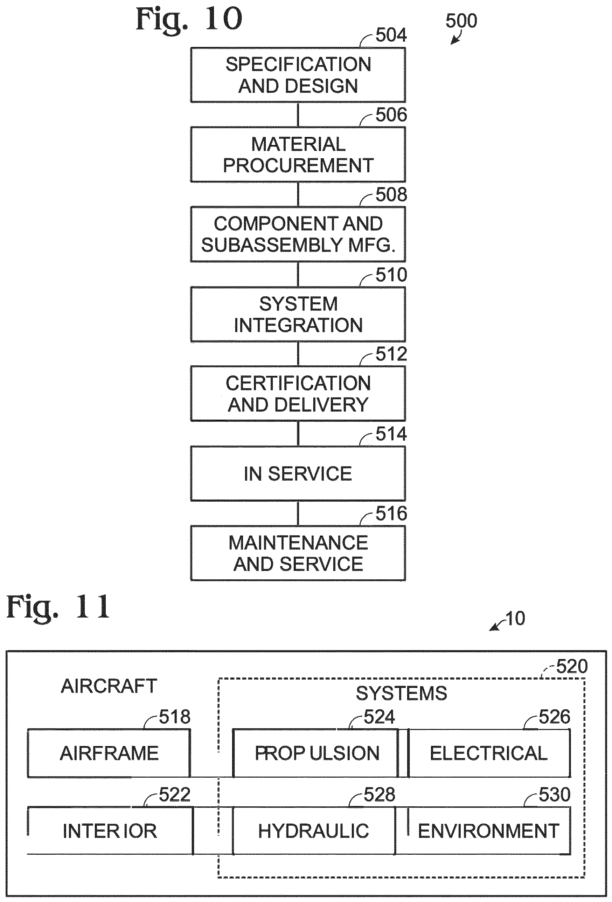

Turning now to Figs. 10-11, examples of the present disclosure may be described in the context of an aircraft manufacturing and service method 500 as shown in Fig. 10 and an aircraft 10 as shown in Fig. 11. During pre-production, exemplary method 500 may include specification and design 504 of aircraft 10 and material procurement 506. During production, component and subassembly manufacturing 508 and system integration 510 of aircraft 10 takes place. Thereafter, aircraft 10 may go through certification and delivery 512 in order to be placed in service 514. While in service, aircraft 10 is scheduled for routine maintenance and service 516 (which may also include modification, reconfiguration, refurbishment, and so on).

Each of the processes of method 500 may be performed or carried out by a system integrator, a third party, and/or an operator (e.g., a customer). For the purposes of this description, a system integrator may include without limitation any number of aircraft manufacturers and major-system subcontractors; a third party may include without limitation any number of venders, subcontractors, and suppliers; and an operator may be an airline, leasing company, military entity, service organization, and so on.

As shown in Fig. 11, aircraft 10 produced by exemplary method 500 may include an airframe 518 with a plurality of systems 520 and an interior 522. Examples of high-level systems 520 include one or more of a propulsion system 524, an electrical system 526, a hydraulic system 528, and an environmental system 530. Any number of other systems also may be included. Although an aerospace example is shown, the principles of the inventions disclosed herein may be applied to other industries, such as the automotive industry.

Apparatuses and methods disclosed herein may be employed during any one or more of the processes of manufacturing and service method 500. For example, components or subassemblies corresponding to production 508 may be fabricated or manufactured in a manner similar to components or subassemblies produced while aircraft 10 is in service. Also, one or more apparatus examples, method examples, or a combination thereof may be utilized during component and subassembly manufacturing 508 and system integration 510, for example, by substantially expediting assembly of or reducing the cost of aircraft 10. Similarly, one or more of apparatus examples, method examples, or a combination thereof may be utilized while aircraft 10 is in service, for example and without limitation, to maintenance and service 516.

As used herein, the terms "adapted" and "configured" mean that the element, component, or other subject matter is designed and/or intended to perform a given function. Thus, the use of the terms "adapted" and "configured" should not be construed to mean that a given element, component, or other subject matter is simply "capable of' performing a given function but that the element, component, and/or other subject matter is specifically selected, created, implemented, utilized, programmed, and/or designed for the purpose of performing the function. It is also within the scope of the present disclosure that elements, components, and/or other recited subject matter that is recited as being adapted to perform a particular function may additionally or alternatively be described as being configured to perform that function, and vice versa. Similarly, subject matter that is recited as being configured to perform a particular function may additionally or alternatively be described as being operative to perform that function.

As used herein, the term "and/or" placed between a first entity and a second entity means one of (1) the first entity, (2) the second entity, and (3) the first entity and the second entity. Multiple entries listed with "and/or" should be construed in the same manner, i.e., "one or more" of the entities so conjoined. Other entities optionally may be present other than the entities specifically identified by the "and/or" clause, whether related or unrelated to those entities specifically identified. Thus, as a non-limiting example, a reference to "A and/or B," when used in conjunction with open-ended language such as "comprising," may refer, in one example, to A only (optionally including entities other than B); in another example, to B only (optionally including entities other than A); in yet another example, to both A and B (optionally including other entities). These entities may refer to elements, actions, structures, steps, operations, values, and the like.

The various disclosed elements of apparatuses and steps of methods disclosed herein are not required to all apparatuses and methods according to the present disclosure, and the present disclosure includes all novel and non-obvious combinations and subcombinations of the various elements and steps disclosed herein. Moreover, one or more of the various elements and steps disclosed herein may define independent inventive subject matter that is separate and apart from the whole of a disclosed apparatus or method. Accordingly, such inventive subject matter is not required to be associated with the specific apparatuses and methods that are expressly disclosed herein, and such inventive subject matter may find utility in apparatuses and/or methods that are not expressly disclosed herein. The invention is defined by the scope of claims.

## Claims

1. An aircraft wing (100), comprising:
a spoiler (110) constructed substantially of a monolithic structural body (112) wherein the monolithic structural body includes:
an upper side (114) that defines a portion of an airfoil surface (102) of the aircraft wing when the spoiler is in a stowed position; and
a lower side (116), opposite the upper side, that includes a plurality of stiffening ribs (120) that define a plurality of open voids (122),
**characterized in that** the monolithic structural body (112) defines at least one integral lug (130) configured for attachment to one or more respective spoiler deployment mechanisms (180).

2. The aircraft wing (100) of claim 1, wherein at least one of the at least one integral lug is positioned such that at least one of the plurality of open voids (122) is positioned and sized to receive at least a portion of a spoiler deployment mechanism of the one or more respective spoiler deployment mechanisms when the spoiler (110) is stowed.

3. The aircraft wing (100) of claim 1 or 2, wherein the monolithic structural body (112) is constructed substantially of a metal, in particular an aluminum alloy.

4. The aircraft wing (100) of any of claims 1 - 3, wherein the monolithic structural body (112) is at least one of a machined structural body and a 3D-printed structural body.

5. The aircraft wing (100) of any of claims 1 - 4, wherein the spoiler (110) is devoid of honeycomb core structures, sandwich panels, and a skin that extends across the plurality of stiffening ribs (120) to define a lower surface of the spoiler.

6. The aircraft wing (100) of any of claims 1 - 5, wherein the plurality of open voids (122) includes polygons, and in particular includes at least one of:
a first subset of open voids that have triangular profiles when viewed from below; and
a second subset of open voids that have quadrilateral profiles when viewed from below.

7. The aircraft wing (100) of any of claims 1 - 6, wherein the monolithic structural body (112) includes an upper surface, wherein the upper surface includes a forward region (142) and an aft region (144) rearward of the forward region, wherein the forward region is configured to match the airfoil surface (102) of the aircraft wing when the spoiler (110) is stowed, wherein the aft region is configured to match the airfoil surface of the aircraft wing responsive to a cruise pressure applied to the aircraft wing and when the spoiler is stowed, and optionally wherein the forward region and the aft region are separated by a parabolic boundary (146).

8. The aircraft wing (100) of any of claims 1 - 7, wherein the spoiler (110) further comprises a flexible trailing edge structure (160) coupled to the monolithic structural body (112) along an aft edge of the monolithic structural body.

9. The aircraft wing (100) of any of claims 1 - 8, wherein the spoiler (110) further comprises side seals (170) coupled to the monolithic structural body (112) along lateral sides of the monolithic structural body, optionally wherein the side seals are constructed of a coated fabric material.

10. The aircraft wing (100) of any of claims 1 - 9, wherein the aircraft wing further includes:
an outboard wing box (190) optionally constructed substantially of a composite material, wherein the spoiler (110) is operatively coupled to the outboard wing box;
at least one spoiler deployment mechanism (180) operatively coupled between the spoiler and the outboard wing box and configured to operatively deploy and stow the spoiler;
a flap (104) operatively coupled to the outboard wing box at least partially below and partially rearward of the spoiler, optionally wherein the flap is constructed substantially of a composite material; and
at least one flap deployment mechanism (106) operatively coupled between the flap and the outboard wing box and configured to operatively deploy and stow the flap;
optionally wherein the monolithic structural body (112) is metallic.

11. The aircraft wing (100) of claim 10, wherein the flap (104) is configured as a fowler flap.

12. The aircraft wing (100) of claim 10 or 11,
wherein the spoiler (110) has a deployed spoiler position and a range of stowed spoiler positions, wherein in the deployed spoiler position, a trailing edge of the spoiler is pivoted upward and away from the flap (104);
wherein the flap has a stowed flap position and a range of deployed flap positions, wherein in the range of deployed flap positions, a trailing edge of the flap is one or both of translated rearward and pivoted downward relative to the spoiler; and
wherein, when the spoiler is in the range of stowed spoiler positions, the trailing edge of the spoiler is engaged with the flap when the flap is in the stowed flap position and when the flap is in at least a subset of the range of deployed flap positions.

13. The aircraft wing (100) of claim 12,
wherein the monolithic structural body (112) comprises a flap contact surface (154) positioned at a rearward edge region of the monolithic structural body;
wherein the flap contact surface is positioned to be engaged by the flap (104) when the flap transitions from the range of deployed flap positions to the stowed flap position to cause the trailing edge of the spoiler to pivot upward; and
wherein the aircraft wing is configured to restrict airflow between the spoiler (110) and the flap when the spoiler is in the range of stowed spoiler positions and when the flap is in the stowed flap position.

14. An aircraft (10), comprising:
a fuselage (20); and
the aircraft wing (100) of any of claims 1 - 13 operatively coupled to the fuselage.

15. A method of constructing a spoiler (110) for an aircraft wing (100), the method comprising:
forming a monolithic structural body (112) of the spoiler, wherein the monolithic structural body has an upper side (114) that defines a portion of an airfoil surface (102) of the aircraft wing when the spoiler is stowed and a lower side (116), opposite the upper side, that includes a plurality of stiffening ribs (120) that define a plurality of open voids (122), and wherein the monolithic structural body (112) defines at least one integral lug (130) configured for attachment to one or more respective spoiler deployment mechanisms (180);
wherein the forming includes at least one of machining and 3D printing.

## Patentansprüche

1. Flugzeugtragfläche (100), die Folgendes umfasst:
einen Spoiler (110), der im Wesentlichen aus einem monolithischen Strukturkörper (112) gebildet ist, wobei der monolithische Strukturkörper Folgendes umfasst:
eine Oberseite (114), die einen Abschnitt einer Flügelfläche (102) der Flugzeugtragfläche definiert, wenn der Spoiler sich in einer eingeklappten Position befindet; und
eine der Oberseite gegenüber liegende Unterseite (116), die eine Mehrzahl von Versteifungsrippen (120), welche eine Mehrzahl von offenen Hohlräumen (122) definieren, umfasst,
**dadurch gekennzeichnet, dass** der monolithische Strukturkörper (112) wenigstens einen einstückig ausgebildeten Vorsprung (130) definiert, welcher dazu ausgelegt ist, an einem oder mehreren jeweiligen Spoilerausklappmechanismen (180) befestigt zu werden.

2. Flugzeugtragfläche (100) nach Anspruch 1, wobei wenigstens einer aus der Menge von wenigstens einem einstückig ausgebildeten Vorsprung so angeordnet ist, dass wenigstens einer aus der Menge von wenigstens einem offenen Hohlraum (122) dazu angeordnet und abgemessen ist, wenigstens einen Abschnitt eines Spoilerausklappmechanismus aus der Menge von einem oder mehreren jeweiligen Spoilerausklappmechanismen aufzunehmen, wenn der Spoiler (110) eingeklappt ist.

3. Flugzeugtragfläche (100) nach Anspruch 1 oder 2, wobei der monolithische Strukturkörper (112) im Wesentlichen aus Metall, insbesondere einer Aluminiumlegierung gebildet ist.

4. Flugzeugtragfläche (100) nach einem der Ansprüche 1 bis 3, wobei es sich bei dem monolithischen Strukturkörper (112) um einen bearbeiteten Strukturkörper und/oder einen mit einem 3D-Drucker gedruckten Strukturkörper handelt.

5. Flugzeugtragfläche (100) nach einem der Ansprüche 1 bis 4, wobei der Spoiler (110) frei von Wabenkernstrukturen, Sandwichplatten und einer sich über die Mehrzahl von Versteifungsrippen (120) erstreckenden Haut ist, um eine untere Fläche des Spoilers zu definieren.

6. Flugzeugtragfläche (100) nach einem der Ansprüche 1 bis 5, wobei die Mehrzahl von offenen Hohlräumen (122) Polygone umfasst, und zwar insbesondere wenigstens einen der Folgenden:
eine erste Teilmenge von offenen Hohlräumen, die bei einer Betrachtung von unten ein dreieckiges Profil aufweisen; und
eine zweite Teilmenge von offenen Hohlräumen, die bei einer Betrachtung von unten ein viereckiges Profil aufweisen.

7. Flugzeugtragfläche (100) nach einem der Ansprüche 1 bis 6, wobei der monolithische Strukturkörper (112) eine obere Fläche umfasst, wobei die obere Fläche einen vorderen Bereich (142) und einen hinter dem vorderen Bereich liegenden hinteren Bereich (144) aufweist, wobei der vordere Bereich dazu ausgelegt ist, mit der Flügelfläche (102) der Flugzeugtragfläche übereinzustimmen, wenn der Spoiler (110) eingeklappt ist, wobei der hintere Bereich dazu ausgelegt ist, mit der Flügelfläche der Flugzeugtragfläche übereinzustimmen als Reaktion auf einen auf die Flugzeugtragfläche ausgeübten Flugdruck und wenn der Spoiler eingeklappt ist, und wobei optional der vordere Bereich und der hintere Bereich durch eine parabolische Begrenzung (146) voneinander getrennt sind.

8. Flugzeugtragfläche (100) nach einem der Ansprüche 1 bis 7, wobei der Spoiler (110) weiterhin eine flexible Hinterkantenstruktur (160) umfasst, die mit dem monolithischen Strukturkörper (112) entlang einer hinteren Kante des monolithischen Strukturkörpers gekoppelt ist.

9. Flugzeugtragfläche (100) nach einem der Ansprüche 1 bis 8, wobei der Spoiler (110) weiterhin seitliche Dichtungen (170) umfasst, die mit dem monolithischen Strukturkörper (112) entlang der Seiten des monolithische Strukturkörpers gekoppelt sind, wobei optional die seitlichen Dichtungen aus einem beschichteten Textilmaterial gebildet sind.

10. Flugzeugtragfläche (100) nach einem der Ansprüche 1 bis 9, wobei die Flugzeugtragfläche weiterhin Folgendes umfasst:
einen Außenrandtragflächenkasten (190), der optional im Wesentlichen aus einem Verbundmaterial gebildet ist, wobei der Spoiler (110) mit dem Außenrandtragflächenkasten betriebsmäßig gekoppelt ist;
wenigstens einen Spoilerausklappmechanismus (180), der zwischen dem Spoiler und dem Außenrandtragflächenkasten betriebsmäßig gekoppelt ist und dazu ausgelegt ist, den Spoiler betriebsmäßig auszuklappen und einzuklappen;
eine Klappe (104), die wenigstens zum Teil unter und zum Teil hinter dem Spoiler mit dem Außenrandtragflächenkasten gekoppelt ist, wobei die Klappe optional im Wesentlichen aus einem Verbundmaterial gebildet ist; und
wenigstens einen Klappenausklappmechanismus (106), der zwischen der Klappe und dem Außenrandtragflächenkasten betriebsmäßig gekoppelt ist und dazu ausgelegt ist, die Klappe betriebsmäßig auszuklappen und einzuklappen;
wobei der monolithische Strukturkörper (112) optional aus Metall gebildet ist.

11. Flugzeugtragfläche (100) nach Anspruch 10, wobei die Klappe (104) als eine Fowlerklappe ausgelegt ist.

12. Flugzeugtragfläche (100) nach Anspruch 10 oder 11,
wobei der Spoiler (110) eine ausgeklappte Spoilerposition und eine Reihe von eingeklappten Spoilerpositionen aufweist, wobei in der ausgeklappten Spoilerposition eine Hinterkante des Spoilers nach oben und von der Klappe (104) weg geschwenkt ist;
wobei die Klappe eine eingeklappte Klappenposition und eine Reihe von ausgeklappten Klappenpositionen aufweist, wobei in der Reihe von ausgeklappten Klappenpositionen eine Hinterkante der Klappe nach hinten verschoben und in Relation zu dem Spoiler nach unten geschwenkt ist; und
wobei, wenn der Spoiler sich in der Reihe von eingeklappten Positionen befindet, die Hinterkante des Spoilers mit der Klappe in Eingriff ist, wenn die Klappe sich in der eingeklappten Klappenposition befindet und wenn die Klappe sich in wenigstens einer Teilmenge der Reihe von ausgeklappten Klappenpositionen befindet.

13. Flugzeugtragfläche (100) nach Anspruch 12,
wobei der monolithische Strukturkörper (112) eine Klappenkontaktfläche (154) umfasst, die an einer Hinterekantenregion des monolithischen Strukturkörpers angeordnet ist;
wobei die Klappenkontaktfläche dazu angeordnet ist, von der Klappe (104) eingegriffen zu werden, wenn die Klappe aus der Reihe von ausgeklappten Klappenpositionen in die eingeklappte Klappenposition übergeht, um zu bewirken, dass die Hinterkante des Spoilers nach oben schwenkt; und
wobei die Flugzeugtragfläche dazu ausgelegt ist, einen Luftstrom zwischen dem Spoiler (110) und der Klappe zu beschränken, wenn der Spoiler sich in der Reihe von eingeklappten Spoilerpositionen befindet und wenn die Klappe sich in der eingeklappten Klappenposition befindet.

14. Flugzeug (10), das Folgendes umfasst:
einen Rumpf (20); und
die Flugzeugtragfläche (100) nach einem der Ansprüche 1 bis 13, wobei die Flugzeugtragfläche mit dem Rumpf betriebsmäßig gekoppelt ist.

15. Verfahren zur Bildung eines Spoilers (110) an einer Flugzeugtragfläche (100), wobei das Verfahren Folgendes umfasst:
Bilden eines monolithischen Strukturkörpers (112) des Spoilers, wobei der monolithische Strukturkörper Folgendes umfasst: eine Oberseite (114), die einen Abschnitt einer Flügelfläche (102) der Flugzeugtragfläche definiert, wenn der Spoiler eingeklappt ist, und eine der Oberseite gegenüber liegende Unterseite (116), die eine Mehrzahl von Versteifungsrippen (120), welche eine Mehrzahl von offenen Hohlräumen (122) definieren, umfasst, und wobei der monolithische Strukturkörper (112) wenigstens einen einstückig ausgebildeten Vorsprung (130) definiert, welcher dazu ausgelegt ist, an einem oder mehreren jeweiligen Spoilerausklappmechanismen (180) befestigt zu werden;
wobei das Bilden ein Bearbeiten und/oder ein Drucken mit einem 3D-Drucker umfasst.

## Revendications

1. Aile d'aéronef (100), comprenant :
un spoiler (110) construit sensiblement à partir d'un corps structurel monobloc (112) présentant :
une face supérieure (114) définissant une partie d'une surface de profil aérodynamique (102) de l'aile d'aéronef lorsque le spoiler est en position rentrée, et
une face inférieure (116), opposée à la face supérieure, présentant une pluralité de nervures de renfort (120) définissant une pluralité de cavités ouvertes (122),
**caractérisée en ce que** le corps structurel monobloc (112) définit au moins une patte solidaire (130) conçue pour une fixation à un ou plusieurs mécanismes de déploiement de spoiler (180) respectifs.

2. Aile d'aéronef (100) selon la revendication 1, dans laquelle au moins une des au moins une pattes solidaires est disposée de manière qu'au moins une cavité ouverte de la pluralité de cavités ouvertes (122) soit disposée et dimensionnée de façon à recevoir au moins une partie d'un mécanisme de déploiement de spoiler des un ou plusieurs mécanismes de déploiement de spoiler respectifs lorsque le spoiler (110) est rentré.

3. Aile d'aéronef (100) selon la revendication 1 ou 2, dans laquelle le corps structurel monobloc (112) se compose sensiblement de métal, notamment d'un alliage d'aluminium.

4. Aile d'aéronef (100) selon l'une quelconque des revendications 1 à 3, dans laquelle le corps structurel monobloc (112) est un corps structurel usiné et/ou un corps structurel imprimé en 3D.

5. Aile d'aéronef (100) selon l'une quelconque des revendications 1 à 4, dans laquelle le spoiler (110) est exempt de structures d'âme en nid d'abeille, de panneaux sandwich et de revêtement recouvrant la pluralité de nervures de renfort (120) pour définir une surface inférieure du spoiler.

6. Aile d'aéronef (100) selon l'une quelconque des revendications 1 à 5, dans laquelle la pluralité de cavités ouvertes (122) comprend des polygones, et comprend notamment :
un premier sous-ensemble de cavités ouvertes présentant des profils triangulaires, vus de dessous, et/ou
un deuxième sous-ensemble de cavités ouvertes présentant des profils quadrilatéraux, vus de dessous.

7. Aile d'aéronef (100) selon l'une quelconque des revendications 1 à 6, dans laquelle le corps structurel monobloc (112) présente une surface supérieure, ladite surface supérieure présentant une zone avant (142) et une zone arrière (144) située sur l'arrière de la zone avant, ladite zone avant étant conçue pour correspondre avec la surface de profil aérodynamique (102) de l'aile d'aéronef lorsque le spoiler (110) est rentré, ladite zone arrière étant conçue pour correspondre avec la surface de profil aérodynamique de l'aile d'aéronef en réaction à une pression de croisière appliquée sur l'aile d'aéronef et lorsque le spoiler est rentré, et lesdites zone avant et zone arrière étant facultativement séparées par une limite parabolique (146).

8. Aile d'aéronef (100) selon l'une quelconque des revendications 1 à 7, dans laquelle le spoiler (110) comprend en outre une structure de bord de fuite (160) flexible couplée au corps structurel monobloc (112) le long d'un bord arrière du corps structurel monobloc.

9. Aile d'aéronef (100) selon l'une quelconque des revendications 1 à 8, dans laquelle le spoiler (110) comprend en outre des joints latéraux (170) couplés au corps structurel monobloc (112) le long de côtés latéraux du corps structurel monobloc, lesdits joints latéraux étant facultativement composés d'un matériau textile enduit.

10. Aile d'aéronef (100) selon l'une quelconque des revendications 1 à 9, comprenant en outre :
un caisson d'aile extérieur (190) facultativement composé sensiblement d'un matériau composite, ledit spoiler (110) étant couplé de manière fonctionnelle au caisson d'aile extérieur,
au moins un mécanisme de déploiement de spoiler (180) couplé de manière fonctionnelle entre le spoiler et le caisson d'aile extérieur et conçu pour déployer et rentrer le spoiler de manière fonctionnelle,
un volet (104) couplé de manière fonctionnelle au caisson d'aile extérieur, au moins partiellement sous le spoiler et partiellement à l'arrière de celui-ci, ledit volet étant facultativement composé d'un matériau composite, et
au moins un mécanisme de déploiement de volet (106) couplé de manière fonctionnelle entre le volet et le caisson d'aile extérieur et conçu pour déployer et rentrer le volet de manière fonctionnelle ;
ledit corps structurel monobloc (112) étant facultativement métallique.

11. Aile d'aéronef (100) selon la revendication 10, dans laquelle le volet (104) est conçu sous la forme d'un volet Fowler.

12. Aile d'aéronef (100) selon la revendication 10 ou 11, dans laquelle :
le spoiler (110) a une position déployée de spoiler et une plage de positions rentrées de spoiler, le bord de fuite du spoiler étant pivoté vers le haut en s'éloignant du volet (104) lorsqu'il se trouve en position déployée,
le volet a une position rentrée de volet et une plage de positions déployées de volet, le bord de fuite du volet se trouvant translaté vers l'arrière et/ou pivoté vers le bas par rapport au spoiler lorsque le volet se trouve dans la plage de positions déployées, et
lorsque le spoiler se trouve dans la plage de positions rentrées, le bord de fuite du spoiler est en contact avec le volet lorsque le volet se trouve en position rentrée et lorsque le volet se trouve dans au moins un sous-ensemble de positions déployées parmi la plage de positions déployées de volet.

13. Aile d'aéronef (100) selon la revendication 12, dans laquelle :
le corps structurel monobloc (112) comprend une surface de contact avec le volet (154) située dans une zone de bord arrière du corps structurel monobloc,
la surface de contact avec le volet est située de manière à subir un contact avec le volet (104) lorsque le volet passe de la plage de positions déployées à la position rentrée pour amener le bord de fuite du spoiler à pivoter vers le haut, et
ladite aile d'aéronef est conçue pour limiter le flux d'air entre le spoiler (110) et le volet lorsque le spoiler se trouve dans la plage de positions rentrées et lorsque le volet se trouve en position rentrée.

14. Aéronef (10), comprenant :
un fuselage (20), et
une aile d'aéronef (100) selon l'une quelconque des revendications 1 à 13, couplée de manière fonctionnelle au fuselage.

15. Procédé de construction d'un spoiler (110) destiné à une aile d'aéronef (100), le procédé comprenant :
la formation d'un corps structurel monobloc (112) du spoiler, ledit corps structurel monobloc ayant une face supérieure (114) définissant une partie d'une surface de profil aérodynamique (102) de l'aile d'aéronef lorsque le spoiler est rentré, et une face inférieure (116), opposée à la face supérieure, qui présente une pluralité de nervures de renfort (120) définissant une pluralité de cavités ouvertes (122), ledit corps structurel monobloc (112) définissant au moins une patte solidaire (130) conçue pour une fixation à un ou plusieurs mécanismes de déploiement de spoiler (180) respectifs ;
la formation comprenant un usinage et/ou une impression en 3D.
